# EUROPEAN PATENT APPLICATION

(11) **EP 4 674 654 A1**
(43) Date of publication of application: **07.01.2026**
(21) Application number: 25184899.0
(22) Date of filing: 24.06.2025
(51) Int. Cl.: B60H 1/00

(54) **WORKING VEHICLE**

(30) Priority: 27.06.2024 JP 2024103595
(71) Applicant: Kubota Corporation, Osaka-shi, Osaka 556-8601 (JP)
(72) Inventor: FUJIMOTO, Kazutaka, Skai-shi (JP); TAKEOKA, Susumu, Sakai-shi (JP)
(74) Representative: Schlegel, Sebastian

(57) **Abstract**

A tractor includes an automatic driving device disposed in a cabin, and a left console that houses the automatic driving device and has an air flow port through which air can flow. In addition, the left console includes a lower console and an upper console disposed adjacent to the lower console and forming the air flow port between the upper console and the lower console.

## Description

The disclosure relates to a technique of a working vehicle.

### Background

Conventionally, technique of a working vehicle including a console is known. For example, JP 2023-108041 A discloses such technique.

JP 2023-108041 A describes a tractor in which a console is disposed on a side of a seat. In such a tractor, various electrical devices may be disposed inside the console.

Here, since the electrical device disposed inside the console generates heat, the temperature inside the console rises, and there is a possibility that the use ambient temperature of the electrical device is not satisfied. Therefore, it is desirable to suppress an increase in the internal temperature of the console and to prevent the occurrence of malfunction of the electrical device housed in the console.

### Summary

One aspect of the present disclosure has been made in view of the above circumstances, and an object to be solved is to provide a working vehicle capable of preventing the occurrence of malfunction of an electrical device housed in a console.

The problem to be solved in one aspect of the present disclosure is as described above, and methods for solving the problem will be described below.

The problem is solved by a working vehicle according to the independent claim 1. Embodiments are the subject matter of dependent claims in the appended set of claims.

A working vehicle according to one aspect of the present disclosure includes an electrical device disposed in a cabin, and a console that houses the electrical device and has an air flow port through which air can flow.

According to one aspect of the present disclosure, heat in the console can be released through the air flow port. Accordingly, it is possible to prevent the occurrence of malfunction of the electrical device housed in the console.

The console according to one aspect of the present disclosure includes a first console and a second console disposed adjacent to the first console and forming the air flow port between the second console and the first console.

According to one aspect of the present disclosure, the air flow port can be easily formed by dividing the console into the first console and the second console.

The second console according to one aspect of the present disclosure is disposed above the first console and includes a placement portion on which an article can be placed.

According to one aspect of the present disclosure, the console can be utilized not only for housing an electrical device but also for placing an article.

The air flow port according to one aspect of the present disclosure is formed at a position lower than the electrical device.

According to one aspect of the present disclosure, even in a case where water intrudes from the air flow port, it is possible to suppress adhesion of water to the electrical device.

At least one of the first console and the second console according to one aspect of the present disclosure includes a cover portion that covers the air flow port from a side.

According to one aspect of the present disclosure, it is possible to prevent water, dust, and the like from entering the console from the air flow port. In addition, by covering the air flow port, the design of the console can be improved.

The second console according to one aspect of the present disclosure includes a cover portion that covers the air flow port from the side and the upper side.

According to one aspect of the present disclosure, it is possible to prevent water, dust, and the like from entering the console from the air flow port. In addition, by covering the air flow port, the design of the console can be improved.

A plurality of the air flow ports according to one aspect of the present disclosure is formed.

According to one aspect of the present disclosure, since air can be introduced from one air flow port and the air can be discharged from other air flow ports, the heat in the console can be effectively released.

The working vehicle according to one aspect of the present disclosure further includes a steering cover portion that covers a steering shaft and is provided with a blow-out port for conditioned air, in which the air flow port is formed at the same height as the blow-out port.

According to one aspect of the present disclosure, the conditioned air from the blow-out port easily enters the console from the air flow port. For example, by introducing cold air from the blow-out port into the console, the heat in the console can be effectively released.

The working vehicle according to one aspect of the present disclosure further includes the steering cover portion that covers a steering shaft and is provided with the blow-out port for conditioned air, in which the air flow port is formed on an extension line in a direction in which the blow-out port faces.

According to one aspect of the present disclosure, the conditioned air from the blow-out port easily enters the console from the air flow port. For example, by introducing cold air from the blow-out port into the console, the heat in the console can be effectively released.

The electrical device according to one aspect of the present disclosure includes an automatic driving device used for controlling automatic driving of the working vehicle.

According to one aspect of the present disclosure, it is possible to prevent the occurrence of malfunction of the automatic driving device.

According to one aspect of the present disclosure, the heat in the console can be released through the air flow port. Accordingly, it is possible to prevent the occurrence of malfunction of the electrical device housed in the console.

### Brief description of drawings

- Fig. 1: is a side view illustrating an overall configuration of a tractor according to one embodiment of the present disclosure;
- Fig. 2: is a plan cross-sectional view illustrating the inside of a cabin;
- Fig. 3: is a perspective view illustrating a left console;
- Fig. 4: is a plan view illustrating an upper console of the left console;
- Fig. 5A: is a cross-sectional view taken along line X1-X1 of Fig. 4; Fig. 5B is a cross-sectional view taken along line X2-X2 of Fig. 4;
- Fig. 6: is a schematic side view illustrating a positional relationship between a blow-out port of conditioned air and an air flow port;
- Fig. 7: is a schematic plan view illustrating a positional relationship between the blow-out port and the air flow port of the conditioned air; and
- Fig. 8: is a side cross-sectional view illustrating the air flow port and a cover portion according to another example.

### Description of embodiments

In the following description, directions indicated by arrows U, D, F, B, L, and R in the drawings are defined as an upward direction, a downward direction, a forward direction, a backward direction, a left direction, and a right direction, respectively.

First, an overall configuration of a tractor 1 according to one embodiment of the present disclosure will be described.

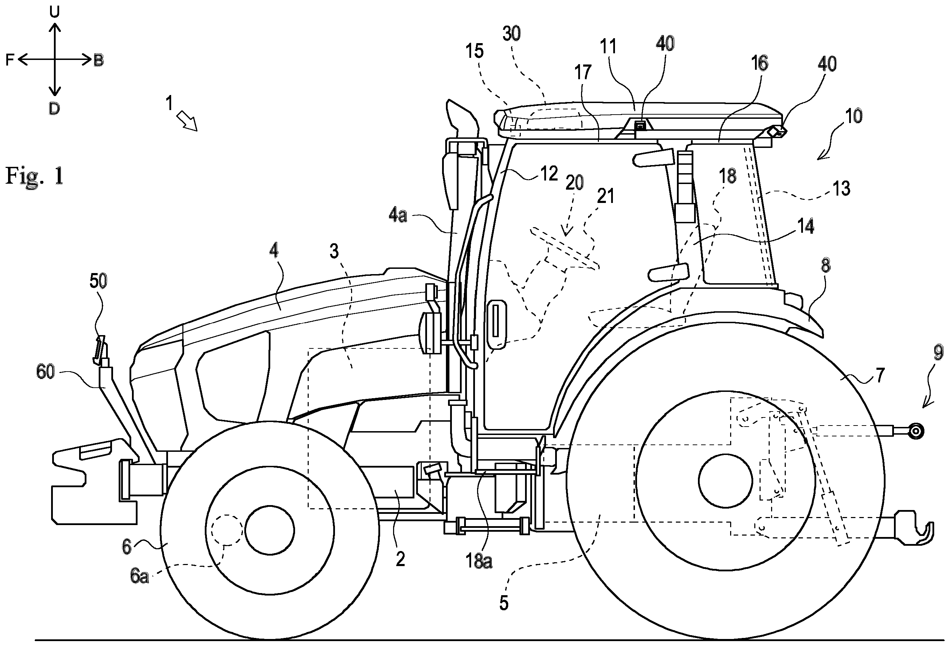

The tractor 1 illustrated in Fig. 1 mainly includes a body frame 2, an engine 3, a bonnet 4, a transmission case 5, front wheels 6, rear wheels 7, a fender 8, a lifting device 9, a cabin 10, a seat 18, a steering device 20, and the like.

The body frame 2 is a frame-shaped member formed by appropriately combining a plurality of panel members. The body frame 2 is formed in a substantially rectangular shape in plan view. The body frame 2 is disposed in the front portion of the tractor 1 with its longitudinal direction oriented in the front-rear direction. The engine 3 is fixed to the rear portion of the body frame 2. The engine 3 is covered with the bonnet 4. The transmission case 5 is fixed to the rear portion of the engine 3. A muffler 4a that discharges exhaust gas of the engine 3 is disposed on the right side of the bonnet 4.

The front portion of the body frame 2 is supported by the pair of left and right front wheels 6 through a front axle mechanism (not illustrated). The rear portion of the transmission case 5 is supported by the pair of left and right rear wheels 7 through a rear axle mechanism (not illustrated). The pair of left and right rear wheels 7 is covered with the fender 8 substantially from the upper side.

The lifting device 9 is provided at the rear portion of the transmission case 5. Various working devices (for example, a cultivator or the like) can be attached to the lifting device 9. The lifting device 9 can lift and lower the attached working device by an actuator such as a hydraulic cylinder. Power of the engine 3 can be transmitted to the working device attached to the lifting device 9 through a PTO (Power Take-Off) shaft (not illustrated).

Power of the engine 3 can be transmitted to the front wheels 6 through the front axle mechanism and can be transmitted to the rear wheels 7 through the rear axle mechanism after being shifted by a transmission (not illustrated) housed in the transmission case 5. The front wheels 6 and the rear wheels 7 are rotationally driven by the power of the engine 3, which allows the tractor 1 to travel. In addition, the working device attached to the lifting device 9 can be driven by the power of the engine 3.

The cabin 10 is provided behind the engine 3. The cabin 10 is placed on a vehicle body (such as the transmission case 5). A living space in which a driver gets is formed inside the cabin 10. As illustrated in Fig. 1, the seat 18 on which the driver sits is disposed at the substantially center of the cabin 10. The cabin 10 is provided with an auxiliary step 18a for getting in and out of the seat 18.

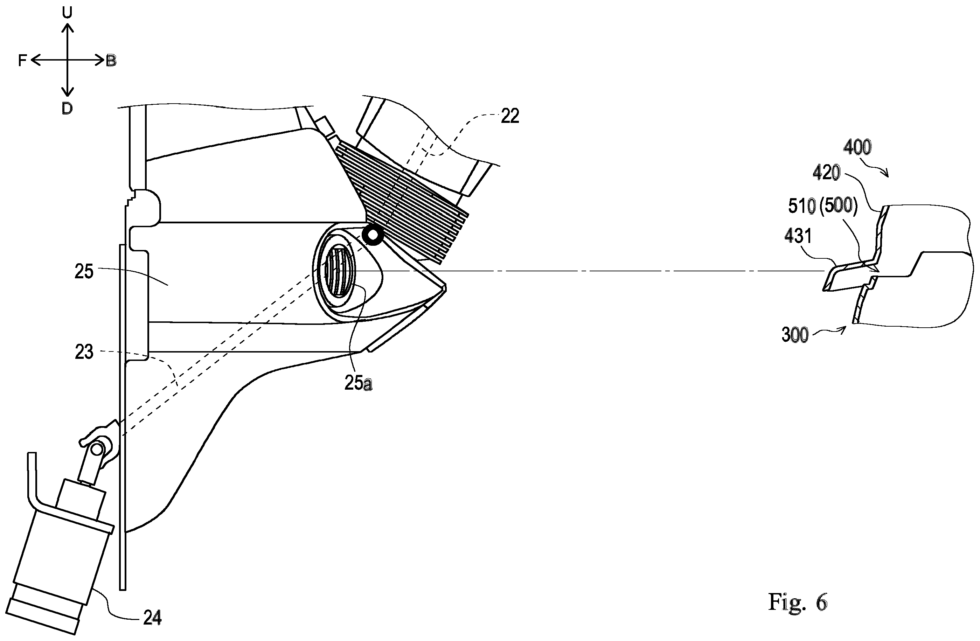

The steering device 20 for adjusting the turning angles of the front wheels 6 is disposed in the front portion of the cabin 10. The steering device 20 includes a steering wheel 21 which is an operation tool for the driver to steer the front wheels 6. The steering wheel 21 is connected to a switching shaft of a power steering controller 24 through a first steering shaft 22 and a second steering shaft 23 (see Fig. 6).

When the steering wheel 21 is turned, the switching shaft of the power steering controller 24 is turned through the first steering shaft 22 and the second steering shaft 23. When the switching shaft rotates, an oil passage of the power steering controller 24 is appropriately switched, and hydraulic oil is appropriately fed to an actuator 6a (see Fig. 1). As a result, the actuator 6a expands and contracts, and the turning angles of the front wheels 6 can be adjusted.

As illustrated in Fig. 6, the first steering shaft 22 and the second steering shaft 23 are covered with a steering cover portion 25. A blow-out port 25a for conditioned air is formed in the steering cover portion 25. The blow-out port 25a is disposed toward the seat 18 side (rear side). A plurality of the blow-out ports 25a is provided, and Fig. 6 illustrates one (the outermost blow-out port 25a) of the plurality of blow-out ports 25a.

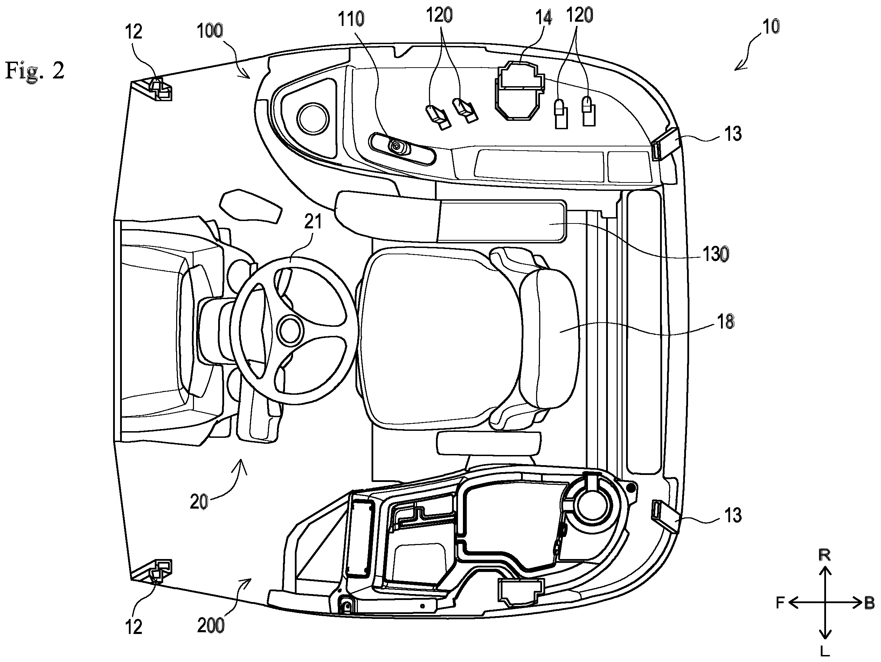

A right console 100 and a left console 200 are provided inside the cabin 10 (see Fig. 2). Note that, the right console 100 and the left console 200 will be described in detail later.

The cabin 10 is provided with a roof 11 constituting a ceiling (roof) portion. The roof 11 has an outer roof constituting the upper side (the outer side of the cabin 10) and an inner roof constituting the lower side (the inner side of the cabin 10). Between the outer roof and the inner roof, a space capable of housing a device such as an air conditioner or an acoustic device is formed.

The cabin 10 includes a front pillar 12 that supports the front portion of the roof 11, a rear pillar 13 that supports the rear portion of the roof 11, and a center pillar 14 that supports the substantially central portion (intermediate portion) in the front-rear direction of the roof 11. The pillars are provided so as to be located on both left and right sides of the cabin 10. In addition, the cabin 10 includes a front beam 15 connecting upper ends of the left and right front pillars 12, a rear beam 16 connecting upper ends of the left and right rear pillars 13 and the left and right center pillars 14, and a side beam 17 connecting upper ends of the left and right rear pillars 13 and the left and right center pillars 14. The side beams 17 are provided so as to be positioned on both left and right sides of the cabin 10.

Each of the pillars and each of the beams are formed in a hollow shape. Wiring connected to a device (for example, a position detection device 30, a camera 40, a radar unit 50, and the like, which will be described later) provided in the tractor 1 can be inserted into the space inside each of the pillars and each of the beams.

In addition, the tractor 1 according to the present embodiment includes the position detection device 30, the camera 40, and the radar unit 50.

The position detection device 30 illustrated in Fig. 1 is a device capable of detecting a position (position information including latitude and longitude) of a vehicle body using a global navigation satellite system (GNSS) such as a GPS (Global Positioning System), various sensors, and the like. The position detection device 30 includes an appropriate reception unit for receiving a satellite signal transmitted from a satellite. The position detection device 30 is disposed, for example, in the internal space of the roof 11. Note that, the position detection device 30 may be disposed outside the roof 11 (for example, in front of the roof 11).

The camera 40 illustrated in Fig. 1 can capture an image of the periphery of the vehicle body. A plurality of the cameras 40 is disposed around the cabin 10. The tractor 1 can control the operation of the vehicle body on the basis of an image captured by the camera 40. For example, in a case where the camera 40 learns a person's appearance on the basis of the image captured by the camera 40 and it is detected from the imaging result of each camera 40 that a person approaches the vicinity of the tractor 1, the tractor 1 can be controlled to stop. Note that, the use of each camera 40 is not limited to this, and the captured image can be used for various uses. The plurality of cameras 40 is arranged at positions where the front, right and left sides, and the rear of the vehicle body can be imaged. Note that, in Fig. 1, illustration of the camera 40 that images the front of the vehicle body is omitted.

The radar unit 50 illustrated in Fig. 1 can detect a detection target around the vehicle body using radio waves (for example, millimeter waves). Examples of the detection target include a structure formed of metal or concrete, other vehicles, and a person. The radar unit 50 is provided with a sensor (for example, a millimeter wave sensor) that emits radio waves and receives the radio waves reflected by the detection target to detect the detection target. Fig. 1 illustrates an example in which the radar unit 50 is provided in front of the bonnet 4 of the tractor 1. The radar unit 50 is attached to the vehicle body of the tractor 1 (for example, the front portion of the body frame 2) by a radar support member 60. Note that, the radar unit 50 can be provided not only in the front portion of the vehicle body (bonnet 4) but also at any place such as left and right side portions or the rear portion of the vehicle body.

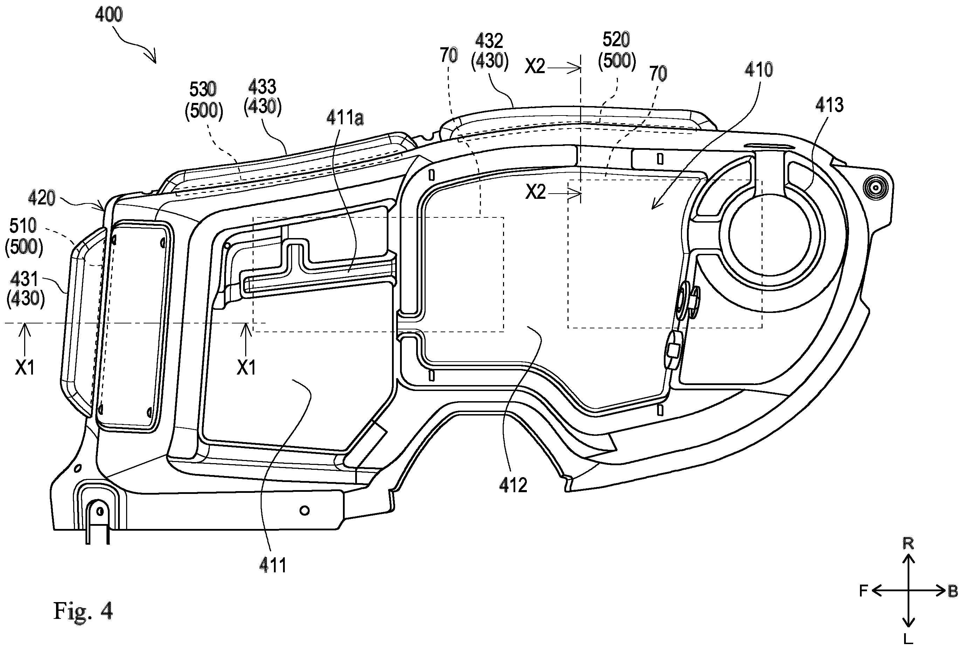

The tractor 1 also includes an automatic driving device 70 capable of executing control (control of automatic driving) for automatically driving the tractor 1 on the basis of the position information detected by the position detection device 30, the image captured by the camera 40, and the detection result of the radar unit 50 (see Fig. 4). The control of the automatic driving includes, for example, control of automatically steering the vehicle body so as to travel straight in parallel to a set predetermined traveling reference line, control of automatically traveling the vehicle body along the created target traveling route, and control of automatically changing the speed or stopping the vehicle body.

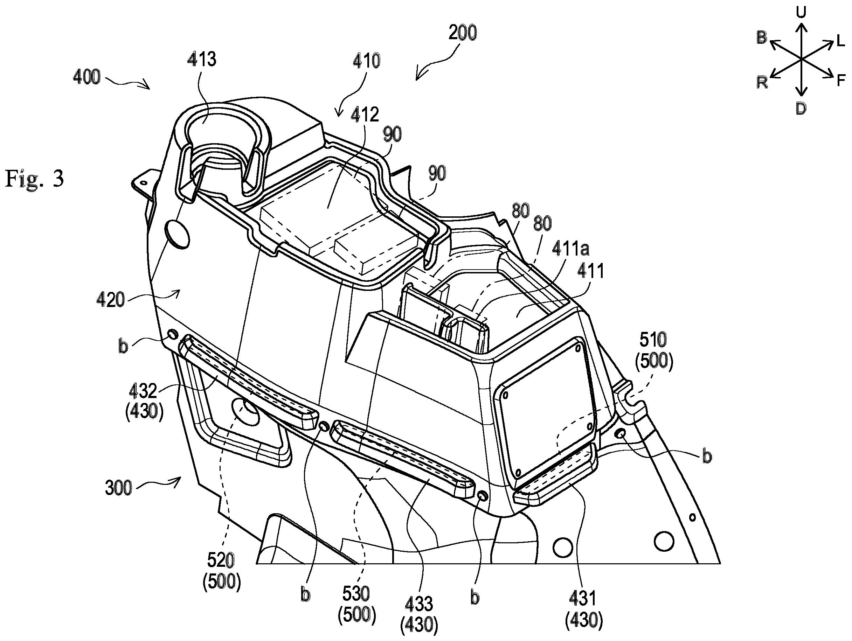

The automatic driving device 70 is housed inside the left console 200 (an internal space S to be described later). The automatic driving device 70 includes a device (image ECU (Electronic Control Unit)) that performs recognition (learning) of a human figure using the image captured by the camera 40, recognition of a detection target using a detection result of the radar unit 50, and the like, a device (monitoring ECU) that can execute a program related to automatic driving, and a device (modem) that receives information from the position detection device 30 and a remote controller 80 (see Fig. 3). Note that, the image ECU has a larger calorific value and a larger arithmetic processing amount than other devices (ECU or the like). The remote controller 80 includes one used for remote operation of the tractor 1 and one used for operation related to automatic driving of the tractor 1. Note that, the automatic driving device 70 is not limited to the above-described example, and various devices used for controlling the automatic driving can be adopted.

The automatic driving device 70 is communicably connected to the position detection device 30, the camera 40, and the radar unit 50 through the wiring. The wiring connected to the device such as the position detection device 30 is connected to the automatic driving device 70 in the left console 200 through the space inside the left center pillar 14 from the space in the roof 11, for example.

As illustrated in Fig. 3, various devices (placed devices 90) that operate using electric power can be placed on the left console 200. The placed device 90 includes a correction device for correcting an error in position information acquired from the global navigation satellite system, and a terminal such as a smartphone. The remote controller 80 and the placed device 90 can be housed in the placement portion (a first placement portion 411 and a second placement portion 412 to be described later) provided on the upper surface of the left console 200.

The right console 100 and the left console 200 will be described below.

The right console 100 illustrated in Fig. 2 is provided with an operation unit for performing various operations related to the operation of the tractor 1. The right console 100 is formed in an elongated shape in the front-rear direction. The right console 100 is disposed on the right side in the cabin 10. More specifically, the right console 100 is disposed on the right side of the seat 18 and the steering wheel 21. The right console 100 is disposed to cover the fender 8 on the right side.

The right console 100 is provided with a transmission lever 110 used for operation of the transmission of the vehicle body and a hydraulic lever 120 used for controlling operation of hydraulic pressure for a working device. Examples of the working device include a working device attached to the lifting device 9 at the rear portion of the vehicle body and a working device attached to the front portion of the vehicle body. The right console 100 is also provided with an armrest 130. The armrest 130 is disposed immediately at the right of the seat 18. The armrest 130 is provided with an operation unit such as an accelerator lever, a position control lever, a tilling depth adjusting dial, or a pumper switch. Note that, the operation unit provided in the right console 100 is not limited to the one described above, and various operation units capable of performing an operation related to the operation of the tractor 1 can be adopted.

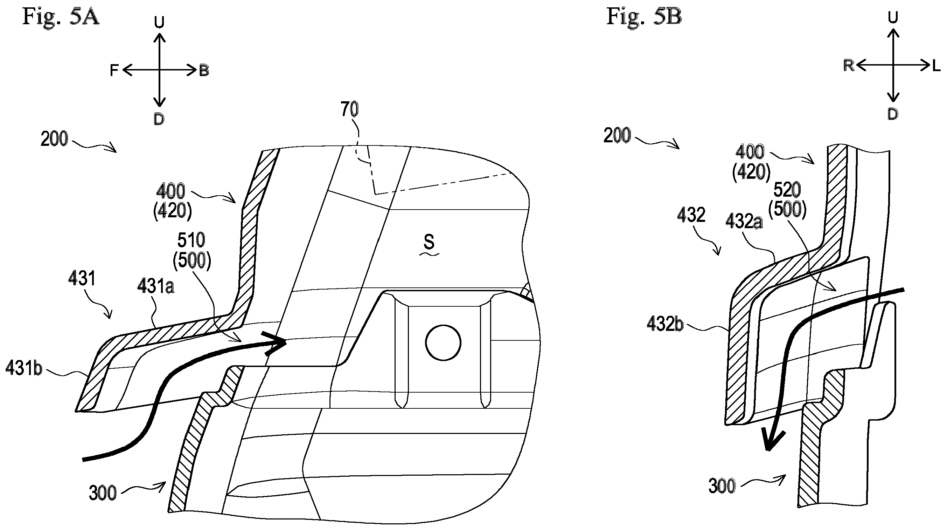

The left console 200 illustrated in Figs. 2 to 5A and 5B can house the automatic driving device 70 therein. The left console 200 is formed in an elongated shape in the front-rear direction. The placement portion (the first placement portion 411, the second placement portion 412, and a bottle holder 413 to be described later) on which an article (for example, the remote controller 80, the placed device 90, or the like) can be placed is formed on the upper surface of the left console 200. The left console 200 is disposed on the left side in the cabin 10. More specifically, the left console 200 is disposed on the left side of the seat 18 and the steering wheel 21.

The left console 200 is disposed to cover the fender 8 on the left side. In the present embodiment, the automatic driving device 70 is housed in a space defined by the left console 200 and the fender 8 (the internal space S of the left console 200) (see Fig. 5A). The automatic driving device 70 in the internal space S is fixed to the fender 8 through an appropriate stay (not illustrated). As illustrated in Fig. 4, the image ECU as the automatic driving device 70 is housed in the front portion of the inside of the left console 200 (the internal space S illustrated in Fig. 5A). In addition, the monitoring ECU and a modem as the automatic driving device 70 are housed in the rear portion of the internal space S.

The left console 200 includes a lower console 300, an upper console 400, and an air flow port 500.

The lower console 300 illustrated in Figs. 3 and 5A and 5B constitutes the lower portion of the left console 200. The lower console 300 is formed to cover the internal space S from the front and the right.

The upper console 400 illustrated in Figs. 3 to 5A and 5B constitutes the upper portion of the left console 200. The upper console 400 is disposed above the lower console 300. The upper console 400 is disposed adjacent to the lower console 300 and forms the air flow port 500 between the upper console 400 and the lower console 300. The upper console 400 is formed to cover the internal space S from the upper, the front, and the right. The upper console 400 includes an upper surface portion 410, a side surface portion 420, and a cover portion 430.

The upper surface portion 410 illustrated in Figs. 3 and 4 is a portion constituting the upper portion of the upper console 400. The upper surface portion 410 is formed so as to cover the internal space S from the upper side. The upper surface portion 410 includes the first placement portion 411, the second placement portion 412, and the bottle holder 413.

The first placement portion 411 can place (store) an article on the front portion of the upper console 400. The first placement portion 411 is formed such that the upper surface portion 410 is recessed downward. The first placement portion 411 is provided in the front portion of the upper surface portion 410. The first placement portion 411 according to the present embodiment is formed so as to be able to place the remote controller 80 and the like. The first placement portion 411 is formed in a substantially rectangular shape in plan view. An erected portion 411a is formed on the first placement portion 411.

The erected portion 411a is formed so as to rise from the bottom of the first placement portion 411. The erected portion 411a is formed so as to laterally divide the first placement portion 411. In addition, the erected portion 411a is formed so as to divide the divided right space forward and backward. In this manner, the erected portion 411a is formed so as to divide two holding spaces for holding the remote controller 80.

The second placement portion 412 can place (store) an article at the rear portion of the upper console 400. The second placement portion 412 is formed such that the upper surface portion 410 is recessed downward. The second placement portion 412 is provided in the rear portion of the upper surface portion 410. The second placement portion 412 according to the present embodiment is formed so as to be able to place the placed device 90 and the like. The second placement portion 412 is formed in a substantially rectangular shape in plan view.

The bottle holder 413 can hold (place) an article such as a bottle. The bottle holder 413 is disposed on the rear side of the second placement portion 412 in the upper console 400. The bottle holder 413 is formed in a substantially cylindrical shape that opens upward.

The side surface portion 420 is a portion constituting the side portion of the upper console 400. The side surface portion 420 is formed so as to cover the internal space S from the front and the right. The side surface portion 420 is formed so as to extend substantially downward from the edge portion of the upper surface portion 410. The side surface portion 420 is fixed to the lower console 300 at a plurality of positions (four positions in the present embodiment) by bolts b (see Fig. 3). Note that, the side surface portion 420 may be fixed to the lower console 300 by rivets. The air flow port 500 is formed between the fixing portions. The air flow port 500 is formed between the side surface portion 420 and the lower console 300.

Hereinafter, the air flow port 500 will be described. The cover portion 430 of the upper console 400 will be described later.

As described above, the air flow port 500 is formed between the lower console 300 and the side surface portion 420 between the portions (bolts b) where the side surface portion 420 is fixed to the lower console 300. The air flow port 500 includes a first air flow port 510, a second air flow port 520, and a third air flow port 530.

The first air flow port 510 is formed such that the front surface of the left console 200 opens. More specifically, the first air flow port 510 is formed between the upper end portion on the front side of the lower console 300 and the lower end portion on the front side of the side surface portion 420 (see Fig. 5A).

The second air flow port 520 is formed such that the right side surface of the left console 200 opens. More specifically, the second air flow port 520 is formed between the upper end portion on the right side of the lower console 300 and the lower end portion on the right side of the side surface portion 420 (see Fig. 5B). The second air flow port 520 is formed in the rear portion of the right side surface of the left console 200.

The third air flow port 530 is formed such that the right side surface of the left console 200 opens. More specifically, the third air flow port 530 is formed between the upper end portion on the right side of the lower console 300 and the lower end portion on the right side of the side surface portion 420 (not illustrated). The third air flow port 530 is formed in the front portion of the right side surface of the left console 200. Thus, the third air flow port 530 is formed in front of the second air flow port 520 and on the rear side of the first air flow port 510.

The air flow port 500 is formed in the left console 200 in this manner, heat in the left console 200 can be released through the air flow port 500. As a result, it is possible to suppress an increase in the ambient temperature inside the left console 200, and eventually, it is possible to prevent the occurrence of malfunction of the automatic driving device 70.

The cover portion 430 illustrated in Figs. 3 to 5A and 5B covers the air flow port 500 from the side and the upper side. The cover portion 430 is formed at the lower end of the side surface portion 420. The cover portion 430 includes a first cover portion 431, a second cover portion 432, and a third cover portion 433.

The first cover portion 431 illustrated in Figs. 3, 4, and 5A covers the first air flow port 510 from the side and the upper side. The first cover portion 431 is formed at the lower end on the front side of the side surface portion 420. The first cover portion 431 includes an upper cover 431a and a side cover 431b.

The upper cover 431a illustrated in Fig. 5A is a portion that covers the first air flow port 510 from the upper side. The upper cover 431a is formed so as to extend substantially forward from the lower end of the side surface portion 420. Thus, the upper cover 431a is formed to extend to the front side of the first air flow port 510.

The side cover 431b illustrated in Fig. 5A is a portion that covers the first air flow port 510 from the side (front). The side cover 431b is formed so as to extend substantially downward from the front end of the upper cover 431a. Thus, the side cover 431b is formed to extend below the first air flow port 510.

The second cover portion 432 illustrated in Figs. 3, 4, and 5B covers the second air flow port 520 from the side and the upper side. The second cover portion 432 is formed at the lower end on the right side of the side surface portion 420. More specifically, the second cover portion 432 is formed on a rear portion of the right side surface of the side surface portion 420. The second cover portion 432 includes an upper cover 432a and a side cover 432b.

The upper cover 432a illustrated in Fig. 5B is a portion that covers the second air flow port 520 from the upper side. The upper cover 432a is formed so as to extend substantially rightward from the lower end of the side surface portion 420. Thus, the upper cover 432a is formed to extend to the right side of the second air flow port 520.

The side cover 432b illustrated in Fig. 5B is a portion that covers the second air flow port 520 from the side (right side). The side cover 432b is formed to extend substantially downward from the right end of the upper cover 432a. Thus, the side cover 432b is formed to extend below the second air flow port 520.

The third cover portion 433 illustrated in Figs. 3 and 4 covers the third air flow port 530 from the side and the upper side. The third cover portion 433 is formed on the right portion of the lower end of the side surface portion 420. More specifically, the third cover portion 433 is formed in the front portion of the right side surface of the side surface portion 420. Thus, the third cover portion 433 is formed on the front side of the second cover portion 432 and on the rear side of the first cover portion 431. The third cover portion 433 is formed in the shape similar to the second cover portion 432, and is formed so as to cover the third air flow port 530 from the side and the upper side.

Since the cover portion 430 is provided so as to cover the air flow port 500 in this manner, it is possible to prevent water, dust, and the like from entering the left console 200 from the air flow port 500. In addition, the cover portion 430 covers the air flow port 500, so that the air flow port 500 can be hidden (made invisible), and as a result, the design of the left console 200 can be improved.

In addition, the air flow port 500 is formed at a position lower than the automatic driving device 70 (see Fig. 5A). As a result, even in a case where water intrudes into the internal space S from the air flow port 500, it is possible to suppress adhesion of the intruding water to the automatic driving device 70. Therefore, it is possible to suppress the occurrence of malfunction of the automatic driving device 70.

In addition, the air flow port 500 is formed at the same height as the blow-out port 25a of the steering cover portion 25 (see Fig. 6). Note that, Fig. 6 schematically illustrates a positional relationship between the blow-out port 25a and the first air flow port 510. Therefore, in Fig. 6, the size of the first air flow port 510 with respect to the blow-out port 25a is different from the actual size, and the distance in the front-rear direction between the blow-out port 25a and the first air flow port 510 is different from the actual distance.

Note that, "the air flow port 500 is formed at the same height as the blow-out port 25a" means that at least a part of the air flow port 500 is formed at a position overlapping the blow-out port 25a in the vertical direction.

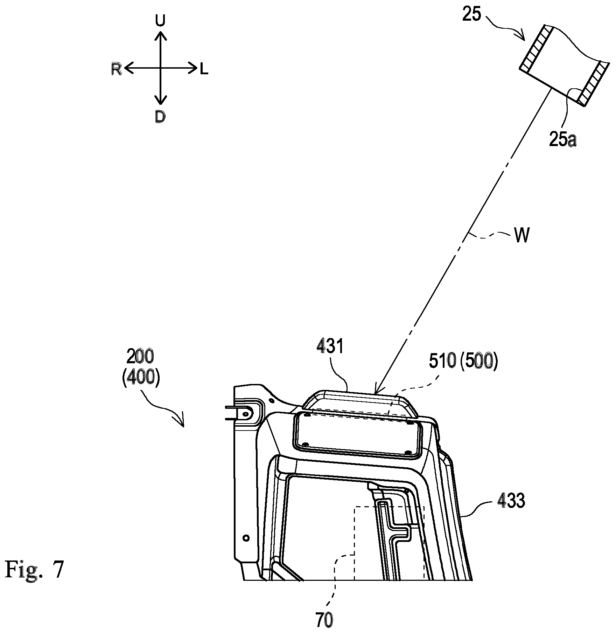

In addition, any one of the plurality of air flow port 500 (the first air flow port 510 in the present embodiment) is formed on an extension line in a direction in which the blow-out port 25a faces (see Fig. 7). Note that, Fig. 7 schematically illustrates a positional relationship between the blow-out port 25a and the first air flow port 510. Therefore, in Fig. 7, the size of the blow-out port 25a with respect to the left console 200 is different from the actual size, and the distance between the blow-out port 25a and the first air flow port 510 is different from the actual distance.

Note that, "the air flow port 500 is formed on an extension line in a direction in which the blow-out port 25a faces" means that at least a part of the air flow port 500 is formed at a position overlapping a blow-out direction W of conditioned air of the blow-out port 25a in plan view. Note that, the air flow port 500 may be formed on an extension line in a direction in which one of the plurality of blow-out ports 25a faces. In addition, in a case where the blow-out port 25a is formed so as to be able to change its orientation, at least a part of the air flow ports 500 may be formed at a position overlapping the blow-out direction W of conditioned air of the blow-out port 25a in a part of the changeable range.

As described above, by setting the height and position of the first air flow port 510 with respect to the blow-out port 25a, the conditioned air from the blow-out port 25a easily enters the left console 200 from the first air flow port 510. For example, in a case where an air conditioner is in a cooling operation, the cold air from the blow-out port 25a is introduced into the left console 200, so that the heat in the left console 200 can be effectively released. As a result, it is possible to suppress an increase in the ambient temperature in the left console 200, and eventually, it is possible to prevent the occurrence of malfunction of the automatic driving device 70 housed in the left console 200.

In addition, the plurality of air flow ports 500 is formed, so that air can be introduced from one air flow port 500, and air can be discharged from other air flow ports 500. In the present embodiment, a part of the conditioned air blown out from the blow-out port 25a is introduced into the internal space S of the left console 200 from the first air flow port 510 formed in the front surface of the left console 200 (see the arrow in Fig. 5A). Then, the air in the internal space S of the left console 200 is discharged from the second air flow port 520 and the third air flow port 530 (see the arrow in Fig. 5B). As described above, the conditioned air from the blow-out port 25a is flown into the left console 200, so that the heat in the left console 200 can be released. As a result, it is possible to prevent the occurrence of malfunction of the automatic driving device 70 housed in the left console 200.

As described above, the tractor 1 (working vehicle) according to the present embodiment includes:
the automatic driving device 70 (electrical device) disposed in the cabin 10; and
the left console 200 (console) that houses the automatic driving device 70 and has the air flow port 500 through which air can flow.

With such a configuration, the heat in the left console 200 can be released through the air flow port 500. As a result, it is possible to prevent the occurrence of malfunction of the automatic driving device 70 housed in the left console 200.

In addition, the left console 200 includes:
the lower console 300 (first console); and
the upper console 400 (second console) disposed adjacent to the lower console 300 and forming the air flow port 500 between the upper console 400 and the lower console 300.

With such a configuration, the air flow port 500 can be easily formed by dividing the left console 200 into the lower console 300 and the upper console 400.

In addition, the upper console 400 includes
a placement portion (first placement portion 411, second placement portion 412, and bottle holder 413) that is disposed above the lower console 300 and on which an article (for example, the remote controller 80 and the placed device 90) can be placed.

With such a configuration, the left console 200 can be used not only for housing the automatic driving device 70 but also for placing an article (for example, the remote controller 80 and the placed device 90).

In addition, the air flow port 500
is formed at a position lower than the automatic driving device 70.

With such a configuration, even in a case where water intrudes from the air flow port 500, it is possible to suppress adhesion of water to the automatic driving device 70.

In addition, at least one of the lower console 300 and the upper console 400 includes
the cover portion 430 that covers the air flow port 500 from the side.

With such a configuration, it is possible to prevent water, dust, and the like from entering the left console 200 from the air flow port 500. In addition, by covering the air flow port 500, the design of the left console 200 can be improved.

In addition, the upper console 400 includes
the cover portion 430 that covers the air flow port 500 from the side and the upper side.

With such a configuration, it is possible to prevent water, dust, and the like from entering the left console 200 from the air flow port 500. In addition, by covering the air flow port 500, the design of the left console 200 can be improved.

In addition, a plurality of the air flow port 500 is formed.

With such a configuration, since air can be introduced from one air flow port 500 (for example, the first air flow port 510) and the air can be discharged from other air flow ports 500 (for example, the second air flow port 520 and the third air flow port 530), the heat in the left console 200 can be effectively released.

In addition, the tractor 1 (working vehicle) further includes
the steering cover portion 25 that covers the steering shaft (the first steering shaft 22 and the second steering shaft 23) and is provided with the blow-out port 25a for conditioned air, in which
the air flow port 500
is formed at the same height as the blow-out port 25a.

With such a configuration, the conditioned air from the blow-out port 25a easily enters the left console 200 from the air flow port 500. For example, by introducing cold air from the blow-out port 25a into the left console 200, the heat in the left console 200 can be effectively released.

In addition, the tractor 1 (working vehicle) further includes
the steering cover portion 25 that covers the steering shaft (the first steering shaft 22 and the second steering shaft 23) and is provided with the blow-out port 25a for conditioned air, and
the air flow port 500
is formed on an extension line in a direction in which the blow-out port 25a faces.

With such a configuration, the conditioned air from the blow-out port 25a easily enters the left console 200 from the air flow port 500. For example, by introducing cold air from the blow-out port 25a into the left console 200, the heat in the left console 200 can be effectively released.

In addition, the electrical device includes
the automatic driving device 70 used for controlling the automatic driving of the tractor 1 (working vehicle).

With such a configuration, it is possible to prevent the occurrence of malfunction of the automatic driving device 70.

Note that the tractor 1 according to the present embodiment is one embodiment of the working vehicle according to the disclosure.

In addition, the automatic driving device 70 according to the present embodiment is one embodiment of the electrical device according to the disclosure.

In addition, the remote controller 80 and the placed device 90 according to the present embodiment are each one embodiment of the article according to the disclosure.

In addition, the left console 200 according to the present embodiment is one embodiment of the console according to the disclosure.

In addition, the lower console 300 according to the present embodiment is one embodiment of the first console according to the disclosure.

In addition, the upper console 400 according to the present embodiment is one embodiment of the second console according to the disclosure.

In addition, the first placement portion 411, the second placement portion 412, and the bottle holder 413 according to the present embodiment are each one embodiment of the placement portion according to the disclosure.

Although one embodiment of the disclosure has been described above, the disclosure is not limited to the above configuration, and various modifications can be made within the scope of the disclosure described in the claims.

For example, in the present embodiment, the left console 200 is formed in a divided structure into the lower console 300 and the upper console 400, but may be formed as an integrated member.

In addition, the cover portion 430 is provided in the upper console 400, but may be provided in the lower console 300.

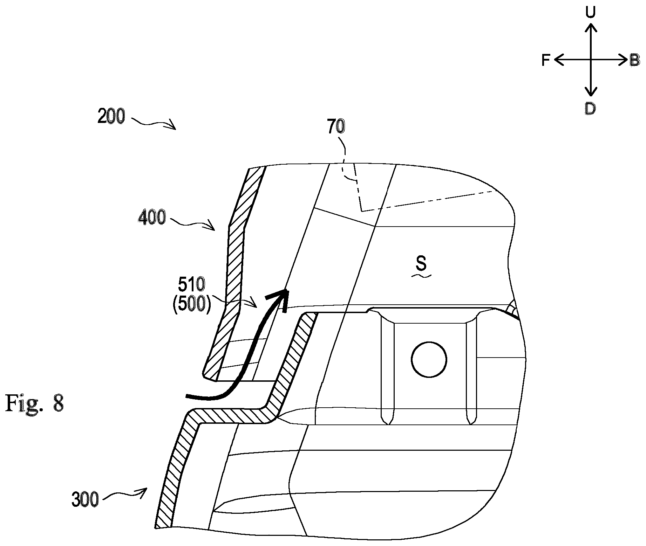

In addition, in the present embodiment, the air flow port 500 is covered by the cover portion 430 formed such that the lower end of the side surface portion 420 of the upper console 400 protrudes to the outside of the left console 200. However, as illustrated in Fig. 8, the air flow port 500 may be covered by the upper end of the lower console 300 formed so as to protrude to the inside of the left console 200. In this case, the lower console 300 and the upper console 400 may be fixed to different support members by the rivets or the like.

In addition, in the present embodiment, the plurality of air flow ports 500 is formed, but one air flow port may be formed.

In addition, in the present embodiment, the cover portion 430 covers the air flow port 500 from the side and the upper side, but may cover only from the side.

In addition, the shape, structure, and the like of each unit exemplified in each of the above embodiments are merely examples, and the configuration of each unit can be arbitrarily changed.

In addition, in each of the above embodiments, the tractor 1 has been exemplified as a working vehicle, but the working vehicle is not limited to such a mode. For example, the working vehicle may be another agricultural vehicle, a construction vehicle, an industrial vehicle, or the like.

## Claims

1. A working vehicle (1) comprising:
- an electrical device (70) disposed in a cabin (10); and
- a console (200) configured to house the electrical device (70) and have an air flow port (500) through which air is able to flow.

2. The working vehicle (1) according to claim 1, wherein the console (200) includes:
- a first console (300); and
- a second console (400) disposed adjacent to the first console (300) and forming the air flow port (500) between the second console (400) and the first console (300).

3. The working vehicle (1) according to claim 2, wherein the second console (400) is disposed above the first console (300) and includes a placement portion (411,412,413) on which an article is able to be placed.

4. The working vehicle (1) according to claim 2 or 3, wherein at least one of the first console (300) and the second console (400) includes a cover portion (430) configured to cover the air flow port (500) from a side.

5. The working vehicle (1) according to any one of claims 2 to 4, wherein
- the second console (400) includes
- a cover portion (430) configured to cover the air flow port (500) from a side and an upper side.

6. The working vehicle (1) according to any one of the preceding claims, wherein the air flow port (500) is formed at a position lower than the electrical device (70).

7. The working vehicle (1) according to any one of the preceding claims, wherein a plurality of air flow ports (500) is formed.

8. The working vehicle (1) according to any one of the preceding claims, further comprising a steering cover portion (25) configured to cover a steering shaft (22,23) and be provided with a blow-out port (25a) for conditioned air,
wherein the air flow port (500) is formed at same height as the blow-out port (25a).

9. The working vehicle (1) according to any one of the preceding claims, comprising a steering cover portion (25) configured to cover a steering shaft (22,23) and be provided with a blow-out port (25a) for conditioned air,
wherein the air flow port (500) is formed on an extension line in a direction in which the blow-out port (25a) faces.

10. The working vehicle (1) according to any one of claims 1 to 9, wherein the electrical device (70) includes an automatic driving device (70) used for controlling automatic driving of the working vehicle (1).
